# EUROPÄISCHE PATENTSCHRIFT

(11) **EP 3 736 520 B1**
(45) Veröffentlichungstag und Bekanntmachung des Hinweises auf die Patenterteilung: **03.05.2023**
(21) Anmeldenummer: 20173711.1
(22) Anmeldetag: 08.05.2020
(51) Int. Cl.: F28G 3/04, F28D 21/00, F23J 15/06, F23J 3/02, F24H 9/00

(54) **REGISTERSCHNECKEN FÜR EINEN RAUCHZUG MIT BÜRSTENELEMENTEN**
COIL SCREW FOR A SMOKE DUCT WITH BRUSH ELEMENTS
VIS D'ENREGISTREMENT POUR UNE CONDUITE DE FUMÉE POURVU D'ÉLÉMENTS DE BROSSE

(30) Priorität: 10.05.2019 DE 102019112308
(43) Veröffentlichungstag der Anmeldung: 11.11.2020
(73) Patentinhaber: Heizomat-Gerätebau + Energiesysteme GmbH, 91710 Gunzenhausen (DE)
(72) Erfinder: Bloos, Robert Alexander, 91710 Gunzenhausen (DE)
(74) Vertreter: Tergau & Walkenhorst Patentanwälte PartGmbB

(56) Entgegenhaltungen:
- EP-A1- 3 015 810
- CN-A- 108 224 454
- US-A- 2 232 358
- US-A- 5 802 667

## Beschreibung

Die Erfindung betrifft einen Wärmetauscher mit einer Registerschnecke für einen Rauchzug mit einer Achse und einer Anzahl von Schneckenwindungen, die entlang eines Längsabschnitts der Achse radial von dieser abstehen. Weiterhin betrifft die Erfindung eine Anlage zur Wärmegewinnung aus Rauchgas.

Die Erfindung ist im Bereich der Wärmeerzeugung insbesondere zur Gebäudebeheizung oder Prozesswärme angesiedelt. Verschmutzte oder staubhaltige Rauchgase entstehen dabei vorwiegend bei der Verbrennung von Biomasse oder Festbrennstoffen, wie beispielsweise Hackschnitzeln oder Holzpellets. Insbesondere Rußbildung und Verschmutzung der Wärmetauscher ist bei diesen Anwendungen problematisch. Schmutzanlagerungen an den Wärmetauscherflächen verringern dessen Effektivität und bedingen häufige Wartungsmaßnahmen.

In der folgenden Beschreibung werden die Begriffe Wärmetauscher und Wärmeüberträger synonym verwendet und bezeichnen die Vorrichtung, in der ein Wärmeübergang von Rauchgas auf einen Wärmeträger, üblicherweise Heizungswasser, Luft oder Ähnlichen stattfindet.

Als Anlage zur Wärmegewinnung wird ein System aus einem oder mehreren Wärmetauschern bezeichnet, die mit einem oder mehreren Wärmeträgern betrieben werden. Diese Vorrichtung beinhaltet auch strömungserzeugende Mittel, Stell- und Regelorgane, Sensoren, Aktoren und integrierte Steuerungen sofern diese in direktem Zusammenhang mit dem Betrieb der Vorrichtung stehen.

Anlagen zur Wärmegewinnung sind vielfach bekannt. Sie werden im Abgassystem eines Wärmeerzeugers installiert. Sie werden vorteilhaft im Wärmeerzeuger integriert oder werden im Rauchgassystem nach dem Wärmeerzeuger installiert. So kann eine Anordnung zur Wärmegewinnung vorteilhaft an bestehenden Wärmeerzeugern nachgerüstet werden.

Als Wärmeerzeuger werden dabei alle Feuerstätten wie beispielsweise Scheitholz-, Pellets- und Hackschnitzelkessel unterschiedlicher Größe, Einzelfeuerstätten, aber auch Kraft-Wärme gekoppelte Anlagen, Heiz(kraft)werke, Müllverbrennungs- und Industrieanlagen bezeichnet. In einer Wärmegewinnungsvorrichtung wird Rauchgas aus einem Wärmeerzeuger weiter abgekühlt und erwärmt dabei einen Wärmeträger.

In einer Wärmegewinnungsvorrichtung werden üblicherweise die Rauchgase in einem oder mehreren Wärmetauschern trocken, also ohne Kondensation auf Temperaturen im Bereich von 90° - 140° C abgekühlt. Teilweise wird in einem anderen, nachgeschalteten Wärmetauscher noch weiter bis unter den Rauchgastaupunkt von 40-60 °C abgekühlt. Eine solche Abkühlung wird als Brennwerttechnik bezeichnet. Dabei fällt korrosives Kondensat an, das abgeführt werden muss.

Die Rauchgase üblicher Biomasse- und Festbrennstofffeuerungen verlassen den Wärmeerzeuger, beispielsweise einen Heizkessel, und werden dem Wärmetauscher mit Temperaturen im Bereich von 600° - 1200°C zugeführt. Nachteilig ist, dass die Verbrennung bei staubhaltigen Rauchgasen zu Rußablagerungen und Verschmutzungen an den Oberflächen von Wärmetauschern führt. Diese verschlechtern den Wärmeübergang im Wärmetauscher. Aufwändige zusätzliche Reinigungsvorrichtungen sind deshalb in Festbrennstoffwärmeerzeugern nötig. Die Betriebssicherheit der Anordnung ist daher dann nicht immer gewährleistet.

Ein Wärmetauscher mit einer Registerschnecke ist beispielsweise aus der Druckschrift EP 3 015 810 A1 bekannt, Registerschnecken selbst, sind den Druckschriften US 2 232 358 A, US 5 802 667 A und CN 108 224 454 A zu entnehmen.

Der Erfindung liegt also die Aufgabe zugrunde die Wärmegewinnung aus Rauchgas so zu verbessern, dass diese wenig wartungsintensiv ist, einen hohen Wirkungsgrad aufweist, einen geringen Geräuschpegel erzeugt und die Wärmetauscherfläche auf ganzer Fläche reinigt.

Diese Aufgabe wird erfindungsgemäß mit den Merkmalen des kennzeichnenden Teils des Anspruchs 1 gelöst. Vorteilhafte weitere Ausgestaltungen sind Gegenstand der Unteransprüche.

Die Erfindung geht dabei von der Überlegung aus, dass im Rahmen von Untersuchungen erkannt wurde, dass die sich an der Innenseite der Rauchzüge ablagernden Ruß- und Rauchpartikel des Rauchgases einen erheblichen Einfluss auf den Wirkungsgrad des Wärmetauschers und somit der gesamten Anlage zur Wärmegewinnung haben. Um Aufwendige Reparaturen zu vermeiden soll dabei eine Reinigung der Rauchzüge stetig und im Betrieb der Anlage vorgenommen werden. Die im Rahmen von Rauchzügen verwendeten Registerschnecken, die insbesondere zur Verlängerung des Rauchgasweges im Rauchzug eingesetzt werden, liegen zwar teilweise an der Unterseite des Rauchzuges auf und können die dortigen Ablagerungen heraustransportieren, sind aber nicht in der Lage den Rauchzug vollumfänglich zu reinigen. Weiterhin ist der Wärmeübertrag von bislang eingesetzten Registerschnecken aufgrund des minimalen Kontaktes zu den Wänden des Rauchzuges sehr eingeschränkt. Zur Erhöhung der Reinigungswirkung und auch für den Wärmeübertrag werden an die vorgesehene Registerschnecke Bürstenelemente angebracht, deren Bürstenkopf radial nach außen stehen und die Innenwand der Rauchzüge berühren. So wird einerseits im Betrieb und bei sich drehender Registerschnecke zuverlässig die Innenwand der Rauchzüge vollumfänglich von Ablagerungen befreit und andererseits über den direkten Kontakt des Bürstenkopfes an der Innenwand des Rauchzuges ein verbesserter Wärmeübertrag, der durch das heiße Rauchgas aufgeheizten Bürstendrähte erzielt.

Ein weiterer Vorteil der Verwendung von Bürsten, insbesondere von Bürstenköpfen mit einem Bürstenbesatz aus flexiblen Fasern oder Drähten, zur Reinigung des Rauchzuges und zum Wärmeübertrag ist, dass diese im Betrieb deutlich geräuschärmer sind, als ein Abschaben der Ablagerungen im Bodenbereich durch eine Registerschnecke. Dies führt dazu, dass eine solche mit Bürstenköpfen ausgestattete Registerschnecke im Rahmen eines Wärmetauschers bzw. einer Anlage zur Wärmegewinnung insbesondere in einem Umfeld eingesetzt werden kann, in dem auf einen niedrigen Geräuschpegel der Anlage besonderer Wert gelegt wird.

Um eine vollumfängliche Reinigung des Rauchzuges zu ermöglichen, sind die Bürstenelemente an den Schneckenwindungen angeordnet und erstrecken sich entlang dieser. Sind also in der Form an die Schneckenwindungen angepasst. Dabei ist prinzipiell eine Anordnung der Bürstenelemente in Rauchzugrichtung vor und hinter den Schneckenwindungen möglich. Eine Anordnung vor den Schneckenwindungen hat dabei den Vorteil, dass die Bürstenelemente und insbesondere die Fasern oder Drähte des Bürstenbesatzes im direkten Rauchgaszug stehen und somit die Wärme des Rauchgases bestmöglich aufnehmen können und über die Kontakte der Faser- oder Drahtspitzen an der Innenseite des Rauchzuges an die Wandung übertragen können. Es entsteht somit ein deutlich verbesserter Wärmeübertrag und somit ein hoher Wirkungsquerschnitt. Umgekehrt werden die Bürstenelemente vor Verbrennungen durch das, insbesondere am Anfang des Rauchzuges, sehr heiße Rauchgas geschützt, wenn sie hinter den Schneckenwindungen angeordnet sind.

Um einerseits einen besonders hohen Wärmeübertrag zu erhalten, andererseits aber die Reinigung des Rauchzuges dauerhaft zu gewährleisten, sind die Bürstenelemente daher in einem ersten Teilabschnitt des Rauchzuges hinter und in einem zweiten Teilabschnitt des Rachzuges vor den Schneckenwindungen angeordnet. Diese Teilabschnitte können sich je nach bevorzugter Ausgestaltung nicht, teilweise oder ganz überlappen.

Um dem Umstand Rechnung zu tragen, dass die Temperatur des Rauchgases vom Eintritt in den Rauchzug bis zum Austritt, also in Rauchgasrichtung, abnimmt, ist in besonders bevorzugter Ausgestaltung der erste Teilabschnitt in Rauchzugrichtung vor dem zweiten Teilabschnitt angeordnet.

Für einen stetigen und sicheren Kontakt der Bürstenelemente, ist der Bürstenkopf derart angeordnet, dass er bzw. wenigstens die Spitzen des am Bürstenkopf angeordneten Bürstenbesatzes in radialer Richtung über die Schneckenwindungen hinausragen und somit die Faser- oder Drahtspitzen des Bürstenbesatzes die Innenseite der Rauchzugwandung berühren.

In vorteilhafter Ausgestaltung sind die Bürstenelemente so ausgebildet, dass die Faser- oder Drahtspitzen in radialer Richtung einen größeren Abstand zur Mittelachse der Registerschnecke aufweisen, als der Radius des Rauchzuges ausgebildet ist. Dies bedeutet, dass die Fasern oder Drähte der Bürstenelemente im Einsatz ein wenig gestaucht werden, wodurch eine sichere Kontaktierung der Bürstenelemente mit der Innenwandung des Rauchzuges gewährleistet wird. Durch den dadurch entstehenden Anpressdruck der Bürstenelemente wird eine besonders gute Reinigung aber auch ein besonders guter Wärmeübertrag ermöglicht. Außerdem wird die Lebensdauer der Bürstenelemente so verlängert, da es vereinzelt im Betrieb aufgrund der Umgebungsbedingungen zu einer Verkürzung der Bürstenelemente durch Hitzeeinwirkungen oder Abrieb kommen kann.

Die mit der Erfindung erzielten Vorteile bestehen somit insbesondere darin, dass durch die Verwendung von Bürstenelementen in Registerschnecken für einen Rauchzug eines Wärmetauschers, dieser Rauchzug einerseits stetig und ohne benötigte Wartungszeiten von Ablagerungen befreit wird und andererseits eine Erhöhung des Wärmeübertrages erzielt wird, da die aufgeheizten Fasern oder Drähte des Bürstenkopfes bzw. Bürstenbesatzes direkt auf die Wandung des Rauchzuges einwirken und die Wärme übertragen. Weiterhin kommt es durch die Verwendung von flexiblen Fasern oder Drähten als Bürstenkopf, die an der Innenseite des Rauchzuges entlangstreifen, zu einer erheblichen Reduzierung der Geräuschentwicklung im Vergleich zu bisherigen Verfahren über die starren Schneckenwindungen einer Registerschnecke.

Anhand der in den Zeichnungsfiguren dargestellten Ausführungsbeispiele ist die Erfindung mit weiteren Einzelheiten erläutert. Es zeigen:
- Fig. 1: eine Anlage zur Wärmegewinnung aus Rauchgas,
- Fig. 2: eine Registerschnecke mit Bürstenelementen,
- Fig. 3: eine Registerschnecke mit Bürstenelementen in verschiedenen Ausführungsformen.

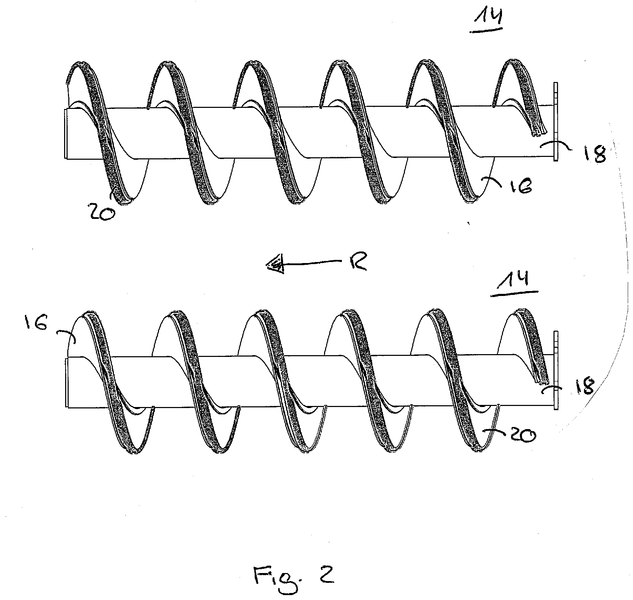

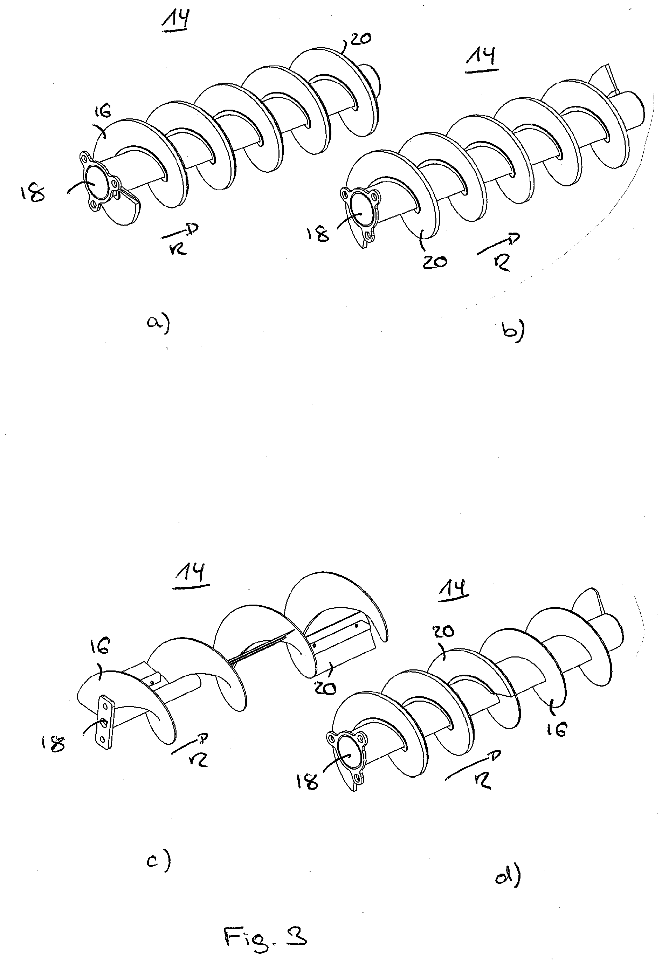

Gleiche Merkmale sind in allen Figuren mit den gleichen Bezugszeichen versehen. Die Ausführungen der Bürstenelemente, die in in den Figuren 2 und 3 dargestellt sind, zeigen nicht die Ausführung gemäß der Erfindung, sind aber hilfreich um die Ausführung gemäß der Erfindung zu verstehen.

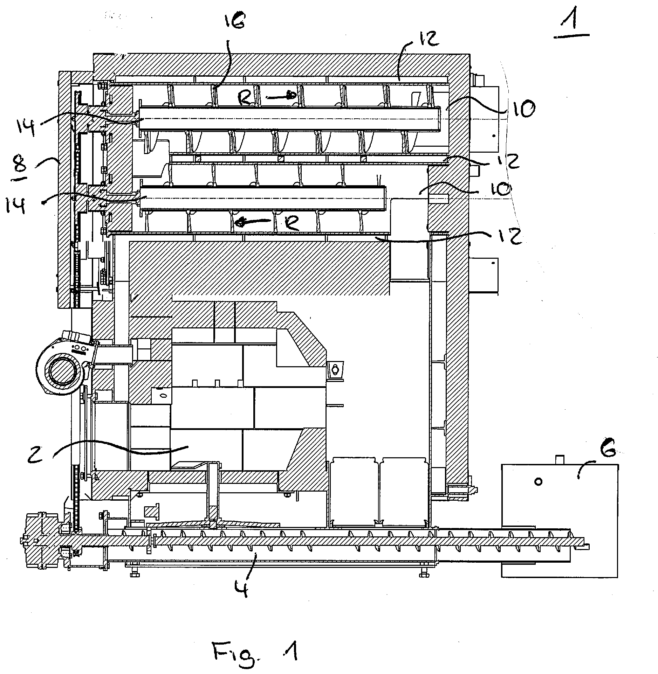

In Figur 1 ist eine Anlage 1 zur Wärmegewinnung aus Rauchgas dargestellt. Diese Anlage 1 umfasst eine Brennkammer 2, der aus einem nicht dargestellten Lager mit einem Fördersystem die Biomasse oder die Festbrennstoffe, wie beispielsweise Hackschnitzel oder Holzpellets, zugeführt werden. Das Fördersystem kann dabei Förderschnecken umfassen. In der Heizkammer 2 wird die Biomasse oder der Festbrennstoff verbrannt und die verbleibende Asche über ein Entaschungssystem 4 mit Fördereinrichtungen in den Aschebehälter 6 transportiert. Je nach Brennstoff-Qualität und Leistungsbedarf muss dieser Aschebehälter 6 entleert werden. Naturbelassene Asche ist dabei kein Abfall, sondern kann als wertvoller Dünger dem Wald zurückgegeben werden.

Das bei der Verbrennung in der Brennkammer 2 entstehende Rauchgas steigt auf und strömt in den Wärmetauscher 8. Dieser Wärmetauscher 8 umfasst im vorliegenden Ausführungsbeispiel zwei Rauchzüge 10. Je nach Anwendungsgebiet und Einsatzzweck ist es aber auch möglich nur einen einzelnen Rauchzug 10 oder mehr als zwei Rauchzüge 10 zu verwenden. Die Rauchzüge 10 in Fig. 1 sind horizontal und übereinander angeordnet und sind im Bezug auf den Rauchgasweg R nacheinander geschaltet. Prinzipiell ist auch eine Anordnung der Rauchzüge 10 in vertikaler Richtung möglich. Das heiße Rauchgas kühlt entlang des Rauchgasweges R ab und überträgt die Wärme über die Wandungen der Rauchzüge 10 auf dahinterliegende Wasserkammern 12 und heizt das darin befindliche Wasser auf. Das so aufgewärmte Wasser kann in Gebäuden für die Heizung oder Warmwasserbereitstellung verwendet werden.

Für einen besonders langen Strömungsweg des Rauchgases in den Rauchzügen 10 umfassen die Rauchzüge 10 über jeweils eine Registerschnecke 14, die im Wesentlichen in der Symmetrieachse des Rauchzuges 10 angeordnet ist. Diese Registerschnecke 14 umfasst dabei eine Anzahl von Schneckenwindungen 16, die sich radial von der Mittelachse 18 der Registerschnecke 14 nach außen erstrecken. Durch diese Schneckenwindungen 16 kann das Rauchgas nicht mehr den direkten Weg durch den Rauchzug 10 nehmen, sondern wird spiralförmig durch den Rauchzug 10 geführt, wodurch sich der Strömungsweg deutlich erhöht und damit auch die Zeit, in der das Rauchgas die Wärme an die Wandungen des Rauchzuges 10 abgegeben kann.

Im Betrieb kommt es immer wieder zu Ablagerungen in den Rauchzügen 10 aufgrund des Rauchgases. Diese Ablagerungen können sich dabei an der Innenseite der Wandungen der Rauchzüge anlagern und bilden dort eine isolierende Schicht, die den Wärmeübertrag deutlich reduziert. Aus diesem Grund umfassen die Registerschnecken 14 Bürstenelemente 20.

In den Figuren 2 und 3 sind die Registerschnecken 14 mit verschiedenen Ausführungsformen der Bürstenelemente 20 dargestellt. Dabei zeigt Figur 2 jeweils eine Registerschnecke 14 mit einem Bürstenelement 20, bei der das Bürstenelement 20 an die Form der Schneckenwindungen 16 angepasst ist und an diesen anliegt. Für den besseren Kontakt der Faser- oder Drahtspitzen des Bürstenbesatzes an der Wandung des Rauchzuges 10 stehen diese in radialer Richtung ein wenig über die Schneckenwindungen 16 hinaus. In der Figur 2 sind die Bürstenelemente 20 dabei einmal in Rauchgasrichtung R hinter den Schneckenwindungen 16 angeordnet (obere Darstellung) und einmal vor den Schneckenwindungen 16 (untere Darstellung).

Neben der Reinigungsfunktion der Rauchzüge 10 erfüllen die Bürstenelemente 20 noch eine weitere wichtige Aufgabe. Die Bürstenelemente 20 umfassen prinzipiell Befestigungselemente, um die Bürstenelemente 20 an der Registerschnecke 14 und dort üblicherweise an der Mittelachse 18 zu befestigen. Des Weiteren umfassen die Bürstenelemente 20 einen Bürstenkopf mit einem Bürstenbesatz aus flexiblen, hitzebeständigen und hitzetransportierenden Fasern oder Drähten. Dies führt dazu, dass die Fasern oder Drähte des Bürstenbesatzes ebenfalls die Wärme des Rauchgases aufnehmen und durch den Kontakt im Rahmen der Reinigung mit den Wandungen des Rauchzuges 10 die Wärme übertragen. Die Bürstenelemente 20 dienen somit nicht nur der Reinigung, sondern sind insbesondere auch dazu ausgelegt, den Wärmeübertrag und somit den Wirkungsgrad des Rauchzuges 10 zu erhöhen.

Bei der Anordnung der Bürstenelemente 20 vor oder hinter den Schneckenwindungen 16, wie dies in den beiden Ausführungsbeispielen nach Figur 2 dargestellt ist, findet eine Abwägung statt, zwischen dem Schutz der Fasern und Drähte der Bürstenelemente 20 vor Verbrennung bei direktem Kontakt mit Rauchgas zu gro-ßer Hitze, wobei in diesem Fall eine Anordnung hinter den Schneckenwindungen 16 zu bevorzugen ist, und einem möglichst direkten Kontakt mit dem Rauchgas zur Aufnahme und Übertragung der Hitze, wobei in diesem Fall eine Anordnung vor den Schneckenwindungen 16 zu bevorzugen ist. Diese beiden Anordnungen können auch kombiniert werden, sodass im Ausführungsbeispiel nach Figur 1 beispielsweise der untere Rauchzug 10 mit einer Registerschnecke 14 ausgestattet wird, bei der die Bürstenelemente 20 hinter den Schneckenwindungen 16 angeordnet sind und der obere Rauchzug 10 mit einer Registerschnecke 14, bei der die Bürstenelemente 20 vor den Schneckenwindungen 16 angeordnet sind. Hintergrund ist dabei, dass das Rauchgas 10 im Verlauf des Weges abkühlt und somit im oberen Rauchzug 10 eine geringere Hitze und somit weniger Gefahr eines Abbrennens oder Schmelzens der Faser und Drähte eines Bürstenelements 20 besteht.

Gemäß der Erfindung ist innerhalb einer Registerschnecke 14 die Bürstenelemente 20 in einem ersten Teilbereich, insbesondere im Bereich des Eintritts des Rauchgases in den Rauchzug 10, hinter den Schneckenwindungen 16 anzuordnen und in einem zweiten Teilbereich, insbesondere im Bereich des Austritts des Rauchgases aus dem Rauchzug 10, vor den Schneckenwindungen 16. Diese beiden Teilbereiche können sich dabei ebenfalls überlappen.

In Figur 3 sind vier Ausführungsbeispiele für Registerschnecken 14 mit Bürstenelementen 20 dargestellt. Während die Darstellung a) mit der oberen Darstellung in Fig. 2 übereinstimmt, wurde in Darstellung b) gänzlich auf die Schneckenwindungen 16 verzichtet. Hier sind die Bürstenköpfe 20 als Schneckenwindungen 16 ausgebildet und ersetzen diese vollständig. Vorteil dabei ist einerseits die Materialeinsparungen, was zusätzlich auch eine Kostenersparnis darstellt, andererseits aber auch eine deutliche Reduzierung des Gewichtes und der Geräuschentwicklung der Registerschnecke 14 gegenüber der Darstellung a), was die Lagerung und Handhabbarkeit der Registerschnecke 14 deutlich erleichtert.

In Darstellung c) der Fig. 3 sind alternative Bürstenelemente 20 dargestellt. Diese Bürstenelemente 20 sind zwischen zwei Schneckenwindungen 16 angeordnet und erstrecken sich hauptsächlich in Längsrichtung, d.h. in Richtung der Längsachse der Registerschnecke 14. Vorteil ist eine besonders einfache und kostengünstige Herstellung der Bürstenelemente 20 und einfache Anbringung an die Registerschnecke 14. In Darstellung d) ist das Bürstenelement 20 wieder an die Schneckenwindungen 16 angepasst, erstreckt sich diesmal aber nur über einen Teilbereich der Registerschnecke 14.

### Bezugszeichenliste

- 1: Anlage zur Wärmegewinnung
- 2: Brennkammer
- 4: Entaschungssystem
- 6: Aschebehälter
- 8: Wärmetauscher
- 10: Rauchzug
- 12: Wasserkammer
- 14: Registerschnecke
- 16: Schneckenwindung
- 18: Mittelachse
- 20: Bürstenelement

- R: Rauchgasweg

## Patentansprüche

1. Wärmetauscher (8) mit mindestens einem Rauchzug (10), wobei zumindest ein Rauchzug (10) eine Registerschnecke (14) mit einer Achse und einer Anzahl von Schneckenwindungen (16), die entlang eines Längsabschnitts der Achse radial von dieser abstehen aufweist, und an der Achse oder an den Schneckenwindungen (16) eine Anzahl von Bürstenelementen (20) mit einem Bürstenkopf derart angeordnet sind, dass der Bürstenkopf in radialer Richtung von der Achse nach außen zeigt und wobei die Registerschnecke (14) axial im Rauchzug (10) angeordnet ist und die Bürstenköpfe die Innenwand des Rauchzuges (10) berühren, **dadurch gekennzeichnet, dass** sich die Bürstenelemente (20) um die Achse und entlang einer Anzahl von Schneckenwindungen (16) erstrecken und dass sich die Bürstenelemente (20) entlang eines ersten Teilabschnittes in Rauchzugrichtung hinter den Schneckenwindungen (16) und entlang eines zweiten Teilabschnittes in Rauchzugrichtung (R) vor den Schneckenwindungen (16) erstrecken.

2. Wärmetauscher (8) nach Anspruch 1, **dadurch gekennzeichnet, dass** der erste Teilabschnitt in Rauchzugrichtung (R) vor dem zweiten Teil-abschnitt angeordnet ist.

3. Wärmetauscher (8) nach einem der Ansprüche 1 oder 2, **dadurch gekennzeichnet, dass** der Bürstenkopf in radialer Richtung über die Schneckenwindungen (16) hinausragt.

4. Wärmetauscher (8) nach einem der Ansprüche 1 bis 3, **dadurch gekennzeichnet, dass** die Bürstenelemente (20) als Schneckenwindungen (16) ausgebildet sind und diese teilweise oder vollständig ersetzen.

5. Anlage zur Wärmegewinnung (1) aus Rauchgas mit einer Anzahl von Wärmetauschern (8) nach einem der Ansprüche 1 bis 4.

6. Anlage zur Wärmegewinnung (1) nach Anspruch 5, **dadurch gekennzeichnet, dass** zumindest ein Rauchzug (10) horizontal angeordnet ist.

## Claims

1. A heat exchanger (8) having at least one smoke duct (10), wherein at least one smoke duct (10) has a coil screw (14) with a shaft and a number of screw windings (16) which protrude along a longitudinal section of the shaft radially from same, and a number of brush elements (20) with a brush head are arranged on the shaft or on the screw windings (16) such that the brush head points outwards in the radial direction from the shaft, and wherein the coil screw (14) is arranged axially in the smoke duct (10), and the brush heads touch the inner wall of the smoke duct (10), **characterised in that** the brush elements (20) extend around the shaft and along a number of screw windings (16), and that the brush elements (20) extend along a first portion behind the screw windings (16) in the smoke duct direction and along a second portion in front of the screw windings (16) in the smoke duct direction (R).

2. The heat exchanger (8) according to Claim 1, **characterised in that** the first portion is arranged in front of the second portion in the smoke duct direction (R).

3. The heat exchanger (8) according to either of Claims 1 or 2, **characterised in that** the brush head protrudes beyond the screw windings (16) in the radial direction.

4. The heat exchanger (8) according to one of Claims 1 to 3, **characterised in that** the brush elements (20) are designed as screw windings (16) and partially or fully replace them.

5. A system for heat recovery (1) from smoke gas, having a number of heat exchangers (8) according to one of Claims 1 to 4.

6. The system for heat recovery (1) according to Claim 5, **characterised in that** at least one smoke duct (10) is arranged horizontally.

## Revendications

1. Échangeur thermique (8) pourvu d'au moins un carneau (10), au moins un carneau (10) comportant une vis de registre (14) dotée d'un axe et d'un nombre de spires de vis (16), qui le long d'une section longitudinale de l'axe débordent de celui-ci en direction radiale, et sur l'axe ou sur les spires de vis (16) un nombre d'éléments de brosse (20) pourvus d'une tête de brosse étant placés de telle sorte que la tête de brosse montre vers l'extérieur en direction radiale à partir de l'axe et la vis de registre (14) étant placée de manière axiale dans le carneau (10) et les têtes de brosses touchant la paroi intérieure du carneau (10), **caractérisé en ce que** les têtes de brosse (20) s'étendent autour de l'axe et le long d'un nombre de spires de vis (16) et **en ce que** les éléments de brosse (20) s'étendent le long d'un premier segment partiel dans la direction du carneau à l'arrière des spires de vis (16) et le long d'un deuxième segment partiel, dans la direction du carneau (R) à l'avant des spires de vis (16).

2. Échangeur thermique (8) selon la revendication 1, **caractérisé en ce que** dans la direction du carneau (R), le premier segment partiel est placé à l'avant du deuxième segment partiel.

3. Échangeur thermique (8) selon l'une quelconque des revendications 1 ou 2, **caractérisé en ce que** la tête de brosse saillit au-delà des spires de vis (16) dans la direction radiale.

4. Échangeur thermique (8) selon l'une quelconque des revendications 1 à 3, **caractérisé en ce que** les éléments de brosse (20) sont conçus sous la forme de spires de vis (16) et remplacent ces dernières en partie ou en totalité.

5. Installation, destinée à récupérer de la chaleur (1) à partir d'un gaz de fumée, pourvue d'un nombre d'échangeurs thermiques (8) selon l'une quelconque des revendications 1 à 4.

6. Installation, destinée à récupérer de la chaleur (1) selon la revendication 5, **caractérisée en ce qu'**au moins un carneau (10) est placé à l'horizontale.
